# EUROPEAN PATENT APPLICATION

(11) **EP 0 721 964 A2**
(43) Date of publication of application: **17.07.1996**
(21) Application number: 95120533.5
(22) Date of filing: 27.12.1995
(51) Int. Cl.: C08G 18/66, C08G 18/32

(54) **Process for the production of molded polyurethane products**

(30) Priority: 10.01.1995 US 370750
(71) Applicant: Bayer Corporation, Pittsburgh, PA 15219-2502 (US)
(72) Inventor: Amstone, Carl H., Bridgeville, Pennsylvania 15017 (US); Gansen, Peter, Dr., Pittsburgh, Pennsylvania 15247 (US); Sungail, Craig, Venetia, Pennsylvania 15367 (US)
(74) Representative: Gremm, Joachim, Dr.

(57) **Abstract**

The present invention is directed to a process for the preparation of a molded product. The method requires the introduction of a polyurethane foam forming reaction mixture into a mold. The present invention is directed to the addition of a specific amine to the reaction mixture in order to avoid problems associated with void formation in instrument panels.

## Description

### BACKGROUND OF THE INVENTION

The production of semi-rigid polyurethanes (e.g., in producing automotive instrument panels) is well known in the art. As is known in the art, such products are typically prepared by placing a skin (such as polyvinylchloride ("PVC") or acrylonitrile/butadiene/styrene ("ABS")) in a mold, spraying or pouring a polyurethane reaction mixture over the skin in an amount sufficient to fill the mold, closing the mold, allowing the mixture to fully react and removing the resultant product from the mold. One problem with many polyurethane formulations used to date is the formation of voids between the skin and the foam.

The object of the present invention was to develop a formulation for use in the production of semi-rigid polyurethane foams which did not suffer from the void formation problem noted above.

### DESCRIPTION OF THE INVENTION

The present invention is therefore directed to an improved process for the preparation of a molded product comprising:
a) positioning a plastic film or sheet in a mold,
b) spraying or pouring a polyurethane forming reaction mixture over said film or sheet in an amount sufficient to fill the mold, said reaction mixture comprising:
   1) from 30 to 100 parts by weight (and preferably from 40 to 60 parts by weight) of one or more polyether triols having molecular weights of from about 2500 to about 6500,
   2) from 30 to 100 parts by weight (and preferably from 40 to 60 parts by weight) of one or more polyether diols having molecular weights of from about 2500 to about 6500,
   3) from 1 to 20 parts by weight (and preferably from 1 to 6 parts by weight) of one or more organic compounds having molecular weights of less than 450, and containing 2 to 4 hydroxyl groups per molecule,
   4) from 0.5 to 4.0 parts by weight (and preferably from 1 to 3.0 parts by weight) of water, and
   5) one or more organic polyisocyanates,
c) closing the mold,
d) allowing said reaction mixture to fully react, and
e) removing the resultant product from the mold,
the improvement wherein said reaction mixture contains from 0.5 to 5.0 parts by weight (and preferably from 1 to 4 parts by weight) per 100 parts by weight of components 1) through 4) of one or more sterically hindered aromatic diamines which contain at least one linear or branched alkyl substituents containing 1 to 4 carbon atoms in the ortho-position to the first amino group and at least one (and preferably two) linear or branched alkyl substituents containing 1 to 4 carbon atoms in the ortho-position to the second amino group, with the amounts of components 1) through 5) and said aromatic diamine being such that the isocyanate index of said reaction mixture is from 80 to 110, and wherein the parts by weight of components 1) through 4) equal 100.

The reaction mixture of the present invention includes relatively high molecular weight triols and diols and polyisocyanates. These materials are all known in the polyurethane art.

Suitable relatively high molecular weight polyether triols and diols include those conventionally used in polyurethane chemistry. Suitable diols and triols have average molecular weights in the range of from about 2500 to about 6,000

Suitable polyethers are known and may be prepared, for example, by the polymerization of epoxides, optionally in the presence of a catalyst such as BF₃, or by chemical addition of such epoxides, optionally as mixtures or successively, to starting components containing reactive hydrogen atoms. Suitable epoxides include ethylene oxide, propylene oxide, butylene oxide, tetrahydrofuran, styrene oxide, or epichlorohydrin. Suitable starter components include water, alcohols, or amines, including, for example, ethylene glycol, 1,2- or 1,3-propanediol, 1,2-, 1,3-, or 1,4-butanediol, trimethylolpropane, 4,4'-dihydroxydiphenylpropane, aniline, ammonia and ethanolamine. Polyethers that contain predominantly primary hydroxyl groups (up to about 90% by weight, based on all of the hydroxyl groups in the polyether) are also often preferred. Polyethers modified by vinyl polymers of the kind obtained, for example, by the polymerization of styrene and acrylonitrile in the presence of polyethers (e.g., U.S. Patents 3,383,351, 3,304,273, 3,523,093, and 3,110,695 and German Patent 1,152,536) are also suitable, as are polybutadienes containing hydroxyl groups. Particularly preferred polyethers include polyoxyalkylene polyethers, such as polyoxyethylene diol, polyoxypropylene diol, polyoxybutylene diol, and polytetramethylene diol.

Polyethers in which polyadducts or polycondensates or polymers are present in a finely dispersed or dissolved form may also be used according to the invention. Polyethers of this type may be obtained, for example, by carrying out polyaddition reactions (e.g., reactions between polyisocyanates and amino functional compounds) or polycondensation reactions (e.g., between formaldehyde and phenols or amines) in situ in the above-mentioned hydroxyl-containing compounds. Processes of this type are described, for example, in German Auslegeschrifts 1,168,075 and 1,260,142 and German Offenlegungsschrifts 2,324,134, 2,423,984, 2,512,385, 2,513,815, 2,550,796, 2,550,797, 2,550,833, 2,550,862, 2,633,293, and 2,639,254.

General discussions of representative polyethers that may be used according to the present invention can be found, for example, in Polyurethanes, Chemistry and Technology, edited by Saunders and Frisch, Interscience Publishers, New York, London, Volume I, 1962, pages 32-42 and pages 44-54, and Volume II, 1964, pages 5-6 and 198-199, and in Kunststoff-Handbuch, Volume VII, edited by Vieweg and Höchtlen, Carl-Hanser-Verlag, Munich, 1966, on pages 45-71.

It is also necessary to include relatively low molecular weight (i.e., having molecular weights of 450 or less), hydroxyl group containing compounds in the reaction mixture. Suitable low molecular weight hydroxy functional materials are also known in the art. Such compounds have from two to four hydroxyl groups and have molecular weights of from 32 to 450. Examples of useful hydroxyl containing compounds include glycols and triols, such as 1,2-ethanediol, 1,2- and 1,3-propylene glycol, 1,4- and 2,3-butylene glycol, 1,6-hexanediol, 1,8-octanediol, neopentyl glycol, cyclohexanedimethanol, 1-methyl-1,3-propanediol, 2-methyl-1,3-propanediol, glycerol, trimethylolpropane, 1,2,6-hexanetriol 1,2,4-butanetriol, and trimethylolethane; and, dialkanol amines, such as diethanol amine. Also useful are reaction products of alkylene oxides (such as ethylene and propylene oxides) and i) any of the above glycols and triols, ii) pentaerythritol, aromatic and/or aliphatic diamines (such as ethylene diamine and tolylene diamine), or iii) monoalkanol-, dialkanol-, or trialkanolamines.

Suitable organic polyisocyanates include aliphatic, cycloaliphatic, araliphatic, aromatic, and heterocyclic polyisocyanates of the type described, for example, by W. Siefken in Justus Liebigs Annalen der Chemie, 562, pages 75 to 136. Such isocyanates include those having the formula

Q(NCO)ₙ

in which n is a number from 2 to about 5 (preferably 2 to 3) and Q is an aliphatic hydrocarbon group containing 2 to about 18 (preferably 6 to 10) carbon atoms, a cycloaliphatic hydrocarbon group containing 4 to about 15 (preferably 5 to 10) carbon atoms, an araliphatic hydrocarbon group containing 8 to 15 (preferably 8 to 13) carbon atoms, or an aromatic hydrocarbon group containing 6 to about 15 (preferably 6 to 13) carbon atoms. Examples of suitable isocyanates include ethylene diisocyanate; 1,4-tetramethylene diisocyanate; 1,6-hexamethylene diisocyanate; 1,12-dodecane diisocyanate; cyclobutane-1,3-diisocyanate; cyclohexane-1,3-and -1,4-diisocyanate, and mixtures of these isomers; 1-isocyanato-3,3,5-trmethyl-5-isocyanato-methylcyclohexane ("isophorone diisocyanate"; see, e.g. German Auslegeschrift 1,202,785 and U.S. Patent 3,401,190); 2,4- and 2,6-hexahydrotoluene diisocyanate and mixtures of these isomers; dicyclohexylmethane-4,4'-diisocyanate ("hydrogenated MDI", or "HMDI"); 1,3- and 1,4-phenylene diisocyanate; 2,4- and 2,6-toluene diisocyanate and mixtures of these isomers ("TDI"); diphenylmethane-2,4'- and/or -4,4'-diisocyanate ("MDI"); naphthylene-1,5-diisocyanate; triphenylmethane-4,4',4''-triisocyanate; polyphenyl-polymethylene-polyisocyanates of the type which may be obtained by condensing aniline with formaldehyde, followed by phosgenation ("crude MDI"), which are described, for example, in British Patents 878,430 and 848,671; norbornane diisocyanates, such as described in U.S. Patent 3,492,330; m- and p-isocyanatophenyl sulfonylisocyanates of the type described in U.S. Patent 3,454,606; perchlorinated aryl polyisocyanates of the type described, for example, in U.S. Patent 3,227,138; modified polyisocyanates containing carbodiimide groups of the type described in U.S. Patent 3,152,162; modified polyisocyanates containing urethane groups of the type described, for example, in U.S. Patents 3,394,164 and 3,644,457; modified polyisocyanates containing allophanate groups of the type described, for example, in British Patent 994,890, Belgian Patent 761,616, and published Dutch Patent Application 7,102,524; modified polyisocyanates containing isocyanurate groups of the type described, for example, in U.S. Patent 3,002,973, German Patents 1,022,789, 1,222,067 and 1,027,394, and German Offenlegungsschrifts 1,919,034 and 2,004,048; modified polyisocyanates containing urea groups of the type described in German Patent 1,230,778; polyisocyanates containing biuret groups of the type described, for example, in German Patent 1,101,394, U.S. Patents 3,124,605 and 3,201,372, and in British Patent 889,050; polyisocyanates obtained by telomerization reactions of the type described, for example, in U.S. Patent 3,654,106; polyisocyanates containing ester groups of the type described, for example, in British Patents 965,474 and 1,072,956, in U.S. Patent 3,567,763, and in German Patent 1,231,688; reaction products of the above-mentioned isocyanates with acetals as described in German Patent 1,072,385; and polyisocyanates containing polymeric fatty acid groups of the type described in U.S. Patent 3,455,883. It is also possible to use the isocyanate-containing distillation residues accumulating in the production of isocyanates on a commercial scale, optionally in solution in one or more of the polyisocyanates mentioned above. It is also possible to use mixtures of the polyisocyanates described above.

In general, it is preferred to use readily available polyisocyanates, such as 2,4- and 2,6-toluene diisocyanates and mixtures of these isomers ("TDI"); polyphenyl-polymethylene-polyisocyanates of the type obtained by condensing aniline with formaldehyde, followed by phosgenation ("crude MDI"); and polyisocyanates containing carbodiimide groups, urethane groups, allophanate groups, isocyanurate groups, urea groups, or biuret groups ("modified polyisocyanates"). The most preferred isocyanates used herein are poyphenyl-polymethylene-polyisocyanates.

Water must also be present in an amount of from 0.5 to 4.0 parts by weight.

The key to the present invention resides in adding to the reaction mixture one or more sterically hindered aromatic diamines which contain at least one linear or branched alkyl substituents containing 1 to 4 carbon atoms in the ortho-position to the first amino group and at least one (and preferably two) linear or branched alkyl substituents containing 1 to 4 carbon atoms in the ortho-position to the second amino group. Such amines are known and used in the polyurethane reaction injection molding ("RIM") process. Examples of useful amines include 3,3'-dimethyl-4,4'-diaminodiphenylmethane, 1-methyl-3,5-bis(methylthio)-2,4-and/or -2,6-diaminobenzene, 1,3,5-triethyl-2,4-diaminobenzene, 1,3,5-trimethyl-2,4-diaminobenzene, 1,3,5-triisopropyl-2,4-diaminobenzene, 1-methyl-3,5-diethyl-2,4- and/or -2,6-diaminobenzene, 4,6-dimethyl-2-ethyl-1,3-diaminobenzene, 3,5,3',5'-traethyl-4,4-diaminodiphenylmethane, 3,5,3',5'-tetraisopropyl-4,4'-diaminodiphenyl- methane, and 3,5-diethyl-3',5'-diisopropyl-4,4'-diaminodiphenylmethane. Such diamines may, of course, also be used as mixtures.

The amounts of the reactive components are the isocyanate index of the reaction mixture is from 80 to 110

Auxiliary agents and additives may optionally also be used in the process of the invention. Suitable auxiliary agents and additives include, for example,surface-active additives, cell regulators, pigments, dyes, UV stabilizers, plasticizers, fungistatic or bacteriostatic substances, and fillers, such as those described in European Patent Application 81,701 at column 6, line 40, to column 9, line 31.

Silicone surfactants may also be used (generally in amounts of from about 0.05 to about 1.0% by weight, based upon the total weight of all the isocyanate-reactive components in the reaction mixture. These are known in the art. Polyether siloxanes are particularly suitable silicone surfactants; especially useful are those which are water soluble. These compounds generally have a polydimethyl siloxane group attached to a copolymer of ethylene oxide and propylene oxide. Foam stabilizers of this kind are known and have been described, for example, in U.S. Patents 2,834,748, 2,917,480 and 3,629,308. Also useful are the known polysiloxane surfactants generally used in the polyurethane art.

The reaction mixture can also contain catalysts for catalyzing the reaction between isocyanate groups and hydroxyl groups (i.e., a urethane catalyst). The urethane catalysts are generally known and include tertiary amines such as triethylamine, tributylamine, N-methyl-morpholine, N-ethylmorpholine, N-cocomorpholine, N,N,N',N''-tetramethyl-ethylene-diamine, 1,4-diaza-bicyclo-(2,2,2)-octane, N-methyl-N'-dimethyl-amino-ethylpiperazine, N,N-dimethylbenzylamine, bis-(N,N-diethyl-aminoethyl)adipate, N,N-diethylbenzylamine, pentamethyl-diethylene-triamine, N,N-dimethyl-cyclohexylamine, N,N,N',N'-tetramethyl-1,3-butanediamine, N,N-dimethyl-β-phenylethylamine 1,2-dimethylimidazole, 2-methylimidazole, m-aminoaniline, N,N-dimethylaminoethanol, 2(2-dimethylaminoethoxy)ethanol, N,N,N',N',N''-pentamethyldipropylene-diamine, N,N-dmethlyamino-N''-methylamnoethanol, 2,2-N-dimethyl-6-N-methyl-2,6-diazanonanal and the like. Also useful are the commercially available tertiary amines such as Niax Al and Niax Al07, available from Union Carbide; Thancat DD, available from Texaco; and the like. Mannich bases known per se obtained from secondary amines such as dimethylamine and aldehydes, preferably formaldehyde, or ketones such as acetone, methyl ethyl ketone or cyclohexanone and phenols such as nonylphenol or bisphenol may also be used as catalysts. Silaamines having carbon-silicon bonds as described, e.g., in German Patent 1,229,290 and U.S. Patent 3,620,984 may also be used as catalysts. Examples include 2,2,4-trimethyl-2-silamorpholine and 1,3-diethylamino-ethyltetramethyldisiloxane.

Organic tin compounds may also be used as catalysts according to the invention. The organic tin compounds used are preferably tin(II) salts of carboxylic acids such as tin(II) acetate, tin(II) octoate, tin(II) ethyl hexoate and tin(II) laurate and tin(IV) compounds such as dibutyl tin oxide, dibutyl tin dichloride, dibutyl tin diacetate, dibutyl tin dilaurate, dibutyl tin maleate or dioctyl tin diacetate. All the above-mentioned catalysts may, of course, be used as mixtures.

According to the invention, the components may be reacted together by known processes often using mechanical devices such as those described in U.S. Patent 2,764,565. Details concerning processing apparatus which may be used according to the invention may be found in Kunststoff-Handbuch, Volume VII, published by Vieweg and Höchtlen, Carl-Hanser-Verlag, Munich, 1966, pages 121 and 205.

The foaming reaction for producing foam products is carried out inside molds. In the process of the invention, a plastic film or sheet (e.g., of PVC or ABS) is preferably placed in the bottom (and may also be placed on the top) of a mold. The foamable reaction mixture is introduced into the mold (either on top of the film or sheet or between the films if both the top and bottom of the mold are covered) which may be made of a metal such as aluminum or a plastics material such as an epoxide resin. The reaction mixture foams up inside the mold to produce the shaped product. Where a plastic film or sheet is not used, as is well known in the art, it may necessary to apply a mold release agent to the surface of the mold.

The invention is further illustrated but is not intended to be limited by the following examples in which all parts and percentages are by weight unless otherwise specified.

### EXAMPLES

In the examples, the following materials were used:
- POLYOL A:: a 4000 molecular weight polyether diol prepared by reacting propylene glycol with propylene oxide ("PO") and ethylene oxide ("EO") (weight ratio of PO to EO was about 4:1), and containing about 90% primary hydroxyl groups.
- POLYOL B:: a 6000 molecular weight polyether triol prepared by reacting glycerin with PO and EO (weight ratio of PO to EO was about 7:1), and containing about 80% primary hydroxyl groups.
- XL A:: a 356 molecular weight reaction product of ethylene diamine and PO.
- XL B:: diethanolamine.
- CAT:: a 3:1 weight ratio catalyst mixture of Niax A-1 (a tertiary amine catalyst, commercially available from Union Carbide) and N-(3-dimethylamino)-n-propyl-urea.
- AMINE:: a commercially available diethyl toluene diamine which is an isomeric mixture of 1-methyl-3,5-diethyl- 2,4-diaminobenzene and 2,6-diaminobenzene.
- ISO:: a commercially available modified isocyanate, sold as Mondur 577, from Miles Inc., having an NCO content of about 29% by weight, an amine equivalent of 145 and a viscosity at 25^{o}C of 650 mPa·s.

Blends were prepared by mixing the components shown in Table 1 in the amounts shown (the amounts are percents by weight, based on the total weight of each blend). The resultant blends and ISO were allowed to equilibrate at 75°F. Foams were prepared at an isocyanate index of 95. A high shear mixer, attached to an air motor rotating at 3500 r.p.m., was used to mix the blend with ISO in a one quart Lily Sweetheart brand unwaxed cup. After 6 seconds of mixing, the reaction mixture was quickly placed at the top of a 45 degree inclined plane covered with polyethylene. The mixture was allowed to flow freely downward until the foaming was complete. The total length of the foam formed on the polyethylene was measured and was as reported in Table 1. Both reaction mixtures were then sprayed into an automotive instrument panel mold between polyvinyl chloride sheets using a high pressure throughput foam machine. The mixture of Example 1 did not make an acceptable part because of the excessive and large voids formed under the polyvinyl chloride top sheet. In contrast, the mixture of Example 2 made an acceptable part with few voids formed.

**TABLE 1**

| | Example 1 | Example 2 |
|---|---|---|
| POLYOL A | 45.96 | 44.83 |
| POLYOL B | 45.96 | 44.83 |
| XL A | 1.02 | 1.00 |
| XL B | 3.57 | 3.49 |
| CATALYST | 0.61 | 0.60 |
| WATER | 2.88 | 2.80 |
| AMINE | ------ | 2.45 |
| Length, inches | 24 (±2) | 16(±2) |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. In a process for the preparation of a molded product comprising:
a) positioning a plastic film or sheet in a mold,
b) spraying or pouring a polyurethane forming reaction mixture over said film or sheet in an amount sufficient to fill the mold, said reaction mixture comprising:
1) from 30 to 100 parts by weight of one or more polyether triols having molecular weights of from about 2500 to about 6500,
2) from 30 to 100 parts by weight of one or more polyether diols having molecular weights of from about 2500 to about 6500,
3) from 1 to 20 parts by weight of one or more organic compounds having molecular weights of less than 450, and containing 2 to 4 hydroxyl groups per molecule,
4) from 0.5 to 4.0 parts by weight of water, and
5) one or more organic polyisocyanates,
c) closing the mold,
d) allowing said reaction mixture to fully react, and
e) removing the resultant product from the mold,
the improvement wherein said reaction mixture contains from 0.5 to 5.0 parts by weight per 100 parts by weight of components 1) through 4) of one or more sterically hindered aromatic diamines which contain at least one linear or branched alkyl substiuents containing 1 to 4 carbon atoms in the ortho-position to the first amino group and at least one (and preferably two) linear or branched alkyl substituents containing 1 to 4 carbon atoms in the ortho-position to the second amino group, with the amounts of components 1) through 5) and said aromatic diamine being such that the isocyanate index of said reaction mixture is from 80 to 110, and wherein the parts by weight of components 1) through 4) equal 100.

2. The process of Claim 1, wherein the amount of component 1) is from 40 to 60 parts by weight, the amount of component 2) is from 40 to 60 parts by weight, the amount of component 3) is from 1 to 6 parts by weight, the amount of component 4) is from 1 to 3 parts by weight and the amount of said hindered aromatic amine is from 1 to 4 parts by weight.
